# EUROPEAN PATENT APPLICATION

(11) **EP 4 693 265 A2**
(43) Date of publication of application: **11.02.2026**
(21) Application number: 24803587.5
(22) Date of filing: 18.03.2024
(51) Int. Cl.: G09G 3/32, H05B 45/325, G06F 3/01, G06F 1/16, G02B 27/01, G09G 3/20

(54) **WEARABLE DEVICE AND METHOD FOR DISPLAYING IMAGE ON BASIS OF BIT SEQUENCES HAVING DIFFERENT BIT DEPTHS**

(30) Priority: 10.05.2023 KR 20230060735; 14.06.2023 KR 20230076447
(71) Applicant: Samsung Electronics Co., Ltd., Suwon-si, Gyeonggi-do 16677 (KR)
(72) Inventor: JANG, Euntaek, Suwon-si Gyeonggi-do 16677 (KR); LEE, Hongkook, Suwon-si Gyeonggi-do 16677 (KR); KIM, Kiwoo, Suwon-si Gyeonggi-do 16677 (KR); PARK, Seoungyong, Suwon-si Gyeonggi-do 16677 (KR); HER, Yongkoo, Suwon-si Gyeonggi-do 16677 (KR)
(74) Representative: Gulde & Partner
(86) International application number: PCT/KR2024/003369
(87) International publication number: WO 2024/232531

(57) **Abstract**

A wearable device is provided. The wearable device may include a display including a driving layer formed on a silicon substrate and a light-emitting layer on the driving layer. The wearable device may comprise a processor. The display may be configured to receive information about an image from the processor through the driving layer. The display may be configured to use each of first bit sequences to cause each of first light-emitting elements in the light-emitting layer to emit light according to a pulse width modulation (PWM) technique, wherein the first light-emitting elements ensure displaying of a first portion of the image to be recognized by foveal vision of a user wearing the wearable device. The display may be configured to use each of second bit sequences to cause each of second light-emitting elements in the light-emitting layer to emit light according to the PWM technique, wherein the second light-emitting elements ensure displaying of a second portion of the image to be recognized by peripheral vision of the user.

## Description

### [Technical Field]

The following description relates to a wearable device and a method for displaying an image based on bit sequences having different bit depths.

### [Background Art]

A wearable device may be used to provide an augmented reality (AR) service, a virtual reality (VR) service, a mixed reality (MR) service, or an extended reality (XR) service. For example, the wearable device may include a display positioned relatively close in front of an eye of a user. For example, the display may have a relatively narrow size. For example, in order to provide a relatively high resolution, the display may include a driving layer formed on a silicon substrate and an emission layer positioned on the driving layer and including a plurality of light emission elements.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

A wearable device is provided. The wearable device may comprise a display including a driving layer formed at a silicon substrate, and an emission layer on the driving layer. The wearable device may comprise a processor. The display may be configured to receive, from the processor, via the driving layer, information regarding an image. The display may be configured to, using each of first bit sequences, emit, in accordance with a pulse width modulation (PWM) scheme, each of first light emission elements in the emission layer for displaying of a first portion of the image identified in accordance with a gaze of a user wearing the wearable device. The display may be configured to, using each of second bit sequences, emit, in accordance with the PWM scheme, each of second light emission elements in the emission layer for displaying of a second portion of the image around the first portion of the image. The display may be configured to, based on the emission of each of the first light emission elements and the emission of each of the second light emission elements, display the image. A bit depth of each of the first bit sequences may be higher than a bit depth of each of the second bit sequences.

A method is provided. The method may be executed for a display of a wearable device including a processor. The method may comprise receiving, from the processor, information regarding an image. The method may comprise, using each of first bit sequences, emitting, in accordance with a pulse width modulation (PWM) scheme, each of first light emission elements in an emission layer of the display of the wearable device used for displaying of a first portion of the image identified in accordance with a gaze of a user wearing the wearable device. The method may comprise, using each of second bit sequences, emitting, in accordance with the PWM scheme, each of second light emission elements in the emission layer for displaying of a second portion of the image around the first portion of the image. The method may comprise, based on the emission of each of the first light emission elements and the emission of each of the second light emission elements, displaying the image. A bit depth of each of the first bit sequences may be higher than a bit depth of each of the second bit sequences.

### [Description of the Drawings]

FIG. 1 is a simplified block diagram of an exemplary wearable device.
FIG. 2 illustrates a display of an exemplary wearable device.
FIG. 3A illustrates an example of displaying an image based on first bit sequences and second bit sequences.
FIG. 3B illustrates an example of emitting each of first light emission elements using each of first bit sequences and emitting second light emission elements using each of second bit sequences.
FIG. 4A illustrates an example of obtaining each of first bit sequences by adding one or more bits obtained from memory to each of bit sequences of a first set obtained from a portion of a plurality of memory cells.
FIG. 4B illustrates an example of obtaining each of second bit sequences from another portion of a plurality of memory cells.
FIG. 5A illustrates an example of storing each of first bit sequences obtained using first circuitry, in a memory cell and memory through second circuitry.
FIG. 5B illustrates an example of storing each of second bit sequences in a memory cell through second circuitry.
FIG. 6A illustrates an example of storing each of first bit sequences in a memory cell and memory through second circuitry.
FIG. 6B illustrates an example of storing each of second bit sequences in a memory cell and memory through second circuitry.
FIG. 7A illustrates an example of storing each of bit sequences of a first set, as each of first bit sequences, in memory cell through first circuitry.
FIG. 7B illustrates an example of storing each of second bit sequences obtained by removing one or more bits from each of bit sequences of a second set, in memory cell through first circuitry.
FIG. 8 is a block diagram of an electronic device in a network environment according to various embodiments.
FIG. 9 is a block diagram of a display module according to various embodiments.

### [Mode for Invention]

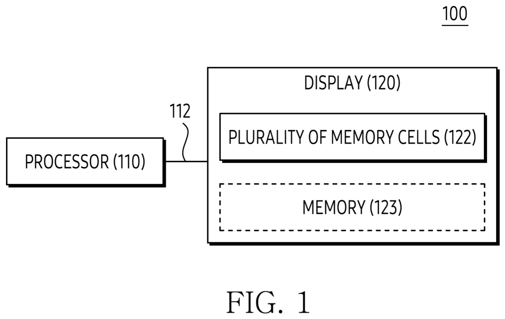

A wearable device may be used to provide an augmented reality (AR) service, a virtual reality (VR) service, a mixed reality (MR) service, and/or an extended reality (XR) service. For example, the wearable device may be an AR glass, a video see through (VST) device, or a VR device, and may be worn on a body part (e.g., head and/or face) of a user. The wearable device may include a display positioned in front of an eye of the user when worn by the user. For example, the display may be used to display an image (or content) for the AR service, the VR service, the MR service, and/or the XR service. For example, since the wearable device is worn on the body part of the user, operations of the display for redcing power consumed by displaying the image may be executed within the wearable device. The wearable device may include components for the execution of the operations. The components may be exemplified in the description of FIG. 1.

FIG. 1 is a simplified block diagram of an exemplary wearable device.

Referring to FIG. 1, a wearable device 100 may include a processor 110 and a display 120.

For example, the processor 110 may be used to generate, obtain, and/or render an image, a screen, and/or content to be displayed on the display 120. For example, the processor 110 may provide and/or transmit, to the display 120, the image, the screen, and/or the content. For example, the processor 110 may provide and/or transmit, to the display, data, information, a signal, a command, and/or an instruction 120 for processing related to the image, the screen, and/or the content. As a non-limiting example, the data, the information, the signal, the command, and/or the instruction may indicate a portion (e.g., a first portion of an image to be illustrated below) of the image having a visual characteristic different from that of another portion (e.g., a second portion of an image to be illustrated below) of the image. For example, the data, the information, the signal, the command, and/or the instruction may include address information of the portion of the images.

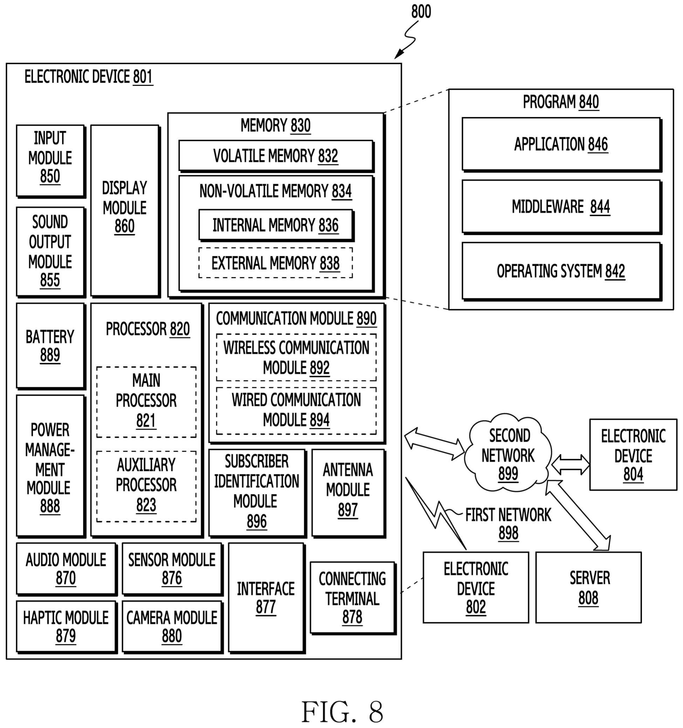

For example, the processor 110 may include at least a portion of the processor 820 of FIG. 8, or may correspond to at least a portion of the processor 820 of FIG. 8. For example, the processor 110 may be operably (or operatively) coupled to the display 120. For example, the processor 110 being operably coupled to the display 120 may indicate that the processor 110 is connected to the display 120 through an interface 112. For example, the interface 112 may be used to transmit, to display 120, the image, the screen, the content, the data, the information, the signal, the command, and/or the instruction transmitted from the processor 110. As a non-limiting example, the interface 112 may include a mobile industry processor interface (MIPI). For example, the processor 110 being operably coupled to the display 120 may indicate that the display 120 is controlled by the processor 110. As a non-limiting example, the processor 110 may control the display 120, based on a video mode of a display serial interface (DSI).

For example, the display 120 may be used to display the image, the screen, and/or the content. For example, the image, the screen, and/or the content may be displayed according to processing of the display 120 executed based on the data, the information, the signal, the command, and/or the instruction.

For example, the display 120 may include a display area positioned in front of an eye of a user when the wearable device 100 is worn by the user. For example, since the display area is generally positioned closer to the user's eye than a display area of a handheld such as a smartphone, a size of the display area of the display 120 may be smaller than a size of the display area of the display of the handheld. For example, since the size of the display area of the display 120 is smaller than a size of the display area of the handheld, a level of integration of pixels (or sub-pixels) of the display 120 may be higher than that of pixels (or sub-pixels) of the handheld. For example, a size of each of the pixels (or the sub-pixels) of the display 120 may be smaller than a size of each of the pixels (or the sub-pixels) of the display of the handheld. As a non-limiting example, a size (e.g., width) of each of the pixels (or the sub-pixels) of the display 120 may be about several tens of micrometers (e.g., about 1 micrometer to about 50 micrometers).

For example, the display 120 may include a driving layer (e.g., a backplane) and an emission layer on the driving layer. For example, the driving layer may be formed on a silicon substrate (or formed of the silicon substrate), for the pixels (or the sub-pixels) having a level of integration higher than that of the pixels (or the sub-pixels) of the display of the handheld. For example, the emission layer may include a plurality of light emission elements driven using the driving layer. As a non-limiting example, the display 120 may include an organic light emitting diode (OLED) on silicon (OLEDoS) or a light emitting diode (LED) on silicon (LEDoS).

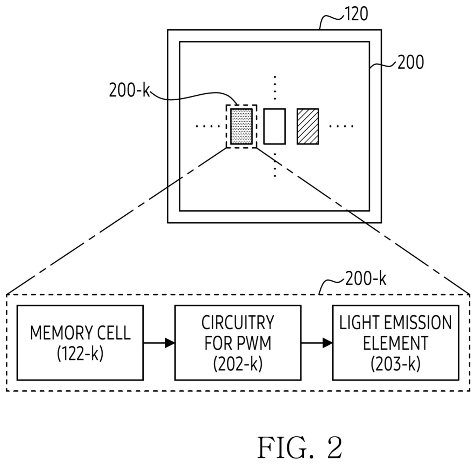

For example, since the driving layer is formed on the silicon substrate, the display 120 may include a plurality of memory cells 122 (or a plurality of cell memories 122) adjacent to each of the plurality of light emission elements. For example, the plurality of memory cells 122 may be connected to each of the plurality of light emission elements. For example, each of the plurality of memory cells 122 being connected to each of the plurality of light emission elements may indicate that each of the plurality of memory cells 122 is connected to each of the plurality of light emission elements through driving circuitry (e.g., circuitry for a pulse width modulation (PWM) exemplified below). However, it is not limited thereto. For example, each of the sub-pixels of the display 120 may include each of the plurality of light emission elements and each of the plurality of memory cells 122. For example, the display 120 may have a memory in pixel (MIP) structure. The display 120 having the MIP structure may be exemplified within the description of FIG. 2.

FIG. 2 illustrates a display of an exemplary wearable device.

Referring to FIG. 2, a display 120 may include a plurality of sub-pixels 200. For example, each of the plurality of sub-pixels 200 may include a memory cell, circuitry for PWM, and a light emission element. For example, the light emission element may be configured to emit light. As a non-limiting example, the light may include red light, green light, blue light, or white light.

For example, one sub-pixel 200-K (K is a natural number greater than or equal to 1 and less than or equal to N, and N is the number of the plurality of sub-pixels 200) may include a memory cell 122-K, circuitry 202-K for PWM connected to the memory cell 122-K, and a light emission element 203-K connected to the circuitry 202-K for PWM.

For example, the circuitry 202-K for PWM may obtain a bit sequence from the memory cell 122-K. For example, the circuitry 202-K for PWM may generate or obtain one or more pulse signals corresponding to the bit sequence.

For example, the light emission element 203-K may be configured to emit light in accordance with a PWM scheme (or PWM driving, or PWM control), based on the one or more pulse signals. For example, a luminance (or grayscale) of light emitted from the light emission element 203-K may be changed according to a width of each of the one or more pulse signals.

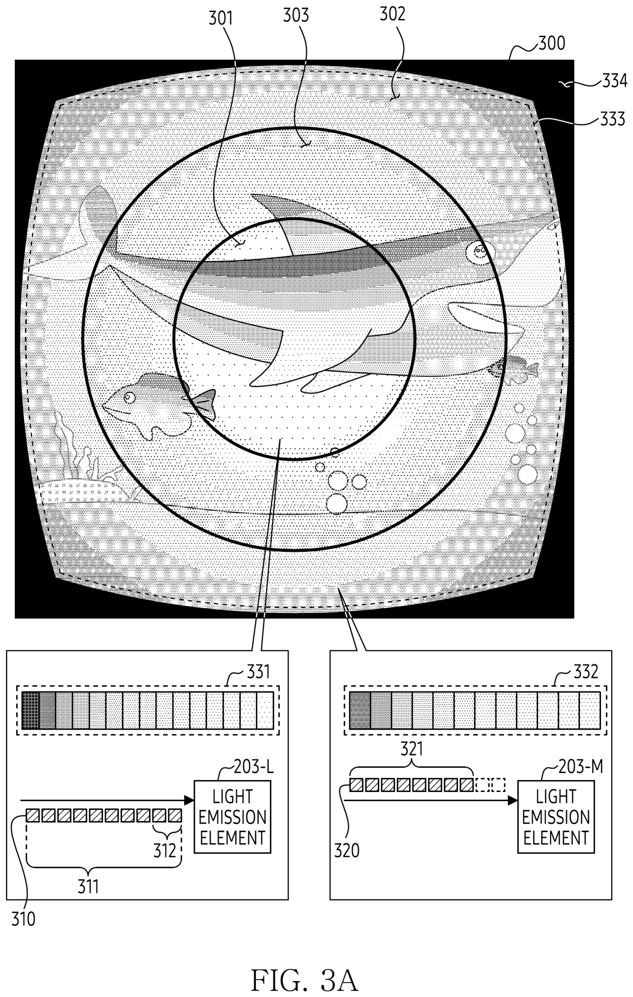

Referring back to FIG. 1, since the wearable device 100 is worn on a portion of the user's body, a capacity of a rechargeable battery (not illustrated in FIG. 1) in the wearable device 100 may be relatively small for light weight. As a non-limiting example, the wearable device 100 may display an image on the display 120 using foveated rendering to compensate for the relatively small capacity of the rechargeable battery. For example, the display 120 may receive information on an image from the processor 110 through the driving layer, using each of first bit sequences, emit, in accordance with the PWM scheme, each of first light emission elements in the emission layer used for displaying of a first portion of the image to be recognized (or gazed) by foveal vision of a user wearing the wearable device 100, and using each of second bit sequences, emit, according to the PWM scheme, each of second light emission elements in the emission layer for displaying a second portion of the image to be recognized by peripheral vision of the user. For example, a bit depth of each of the first bit sequences may be higher than a bit depth of each of the second bit sequences. For example, the display 120 may display the image, based on the light emission of each of the first light emission elements and the light emission of each of the second light emission elements. Displaying the image based on the first bit sequences and the second bit sequences may be exemplified in the description of FIG. 3A.

FIG. 3A illustrates an example of displaying an image based on first bit sequences and second bit sequences.

Referring to FIG. 3A, a display 120 may display an image 300 using foveated rendering.

For example, a first portion 301 of the image 300 displayed on the display 120 may be recognized (or gazed) by foveal vision. For example, the first portion 301 of the image 300 may indicate a portion of the image 300 identified according to a gaze of a user wearing a wearable device 100. For example, the first portion 301 of the image 300 may indicate a portion of the image 300 where the gaze corresponding to the foveal vision is positioned. For example, the first portion 301 of the image 300 may indicate a portion of the image 300 focused on by a user gazing the image 300. For example, the first portion 301 of the image 300 may be circular, as the illustration of FIG. 3A. For example, unlike the illustration of FIG. 3A, the first portion 301 of the image 300 may be rectangular or triangular. However, it is not limited thereto. For example, the first portion 301 of the image 300 may have a shape corresponding to a shape of an area recognized by foveal vision.

For example, the first portion 301 of the image 300 displayed on the display 120 may be identified based on a position of a gaze of a user wearing the wearable device 100 identified from images obtained through at least one camera of the wearable device 100 facing an eye of the user. For example, the first light emission elements for displaying the first portion 301 of the image 300 may be identified by the display 120, based on address information (or data) received from the processor 110 and indicating a position of the first portion 301 of the image 300 according to the identification. For example, the address information may be received from the processor 110 at another reception timing different from a reception timing of information on the image 300. For example, the address information may be received from the processor 110 before (or immediately before) the information on the image 300 is received. For example, the address information may be received from the processor 110 in conjunction with the information on the image. For example, the address information may be included in the information on the image 300 received from the processor 110. For example, the address information may be included outside an area 333 for the image 300 displayed on the display 120. For example, the address information may be included in an area 334 positioned outside the area 333.

As a non-limiting example, when the first portion 301 of the image 300 is circular, the address information may indicate a center point of the first portion 301 of the image 300 and a width (e.g., a radius or a diameter) of the first portion 301 of the image 300. As a non-limiting example, when the first portion 301 of the image 300 is rectangular, the address information may indicate a start address ((e.g., an address of the leftmost and uppermost corner of the image 300) of the first portion 301 of the image 300 and an end address (e.g., an address of the rightmost and lowermost corner of the image 300) of the first portion 301 of the image 300.

For example, a second portion 302 of the image 300 displayed on the display 120 may be recognized (or gazed) by peripheral vision outside a zone gazed by a fovea centralis. For example, the second portion 302 of the image 300 may indicate a portion of the image 300 distinguished from the first portion 301 of the image 300. For example, the second portion 302 of the image 300 may indicate a portion of the image 300 positioned outside the gaze corresponding to the foveal vision. For example, the second portion 302 of the image 300 may be positioned around the first portion 301 of the image 300. As a non-limiting example, the second portion 302 of the image 300 may indicate a portion of the image 300 spaced apart by a distance longer than a reference distance from a position of the gaze. For example, the second portion 302 of the image 300 may indicate a portion of the image 300 that is included in a field of view of a user gazing the image 300 but is not focused by the user.

For example, a resolution of the first portion 301 of the image 300 displayed on the display 120 may be higher than a resolution of the second portion 302 of the image 300 displayed on the display 120. For example, a gradation 331 represented in the first portion 301 of the image 300 displayed on the display 120 may be richer than a gradation 332 represented in the second portion 302 of the image 300 displayed on the display 120.

For example, the display 120 may display the image 300, by emitting each of first light emission elements 203-L used for displaying of the first portion 301 of the image 300 in accordance with the PWM scheme by using each of first bit sequences 310 and emitting each of second light emission elements 203-M used for displaying of the second portion 302 of the image 300 in accordance with the PWM scheme by using each of second bit sequences 320. For example, since a bit depth 311 (e.g., 10-bit) of each of the first bit sequences 310 is higher than a bit depth 321 (e.g., 8-bit) of each of the second bit sequences 320, the display 120 may display the first portion 301 of the image 300 having an improved expression compared to an expression of the second portion 302 of the image 300.

For example, each of the first bit sequences 310 may further include one or more bits 312 with respect to each of the second bit sequences 320. As a non-limiting example, the one or more bits 312 may be positioned from the rightmost of each of the first bit sequences 310, as the illustration of FIG. 3A. For example, the one or more bits 312 may include a least significant bit (LSB) and a 9^{th} most significant bit (MSB). As a non-limiting example, the one or more bits 312 may be positioned from the leftmost of each of the first bit sequences 310, unlike the illustration of FIG. 3A. For example, the one or more bits 312 may include an MSB and a 2^{nd} MSB. However, it is not limited thereto.

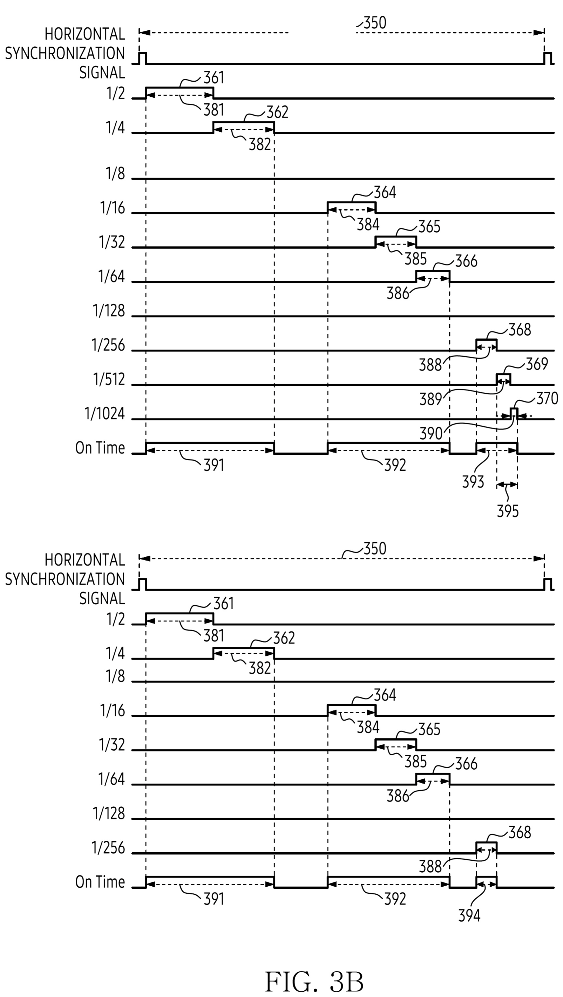

For example, each of the first light emission elements 203-L may be emitted, in accordance with the PWM scheme, by using each of the first bit sequences 310, and each of the second light emission elements 203-M may be emitted, in accordance with the PWM scheme, by using each of the second bit sequences 320. The emission of each of the first light emission elements 203-L in accordance with the PWM scheme and the emission of each of the second light emission elements 203-M in accordance with the PWM scheme may be exemplified in the description of FIG. 3B.

FIG. 3B illustrates an example of emitting each of first light emission elements using each of first bit sequences and emitting second light emission elements using each of second bit sequences.

Referring to FIG. 3B, one of the first bit sequences may be '1101110111', and one of the second bit sequences may be '11011101'. For example, the bit sequence, which is '1101110111', may further include an '11' positioned from the rightmost position with respect to the bit sequence, which is '11011101' (e.g., the LSB and 9^{th} MSB of '1101110111').

For example, circuitry for PWM (e.g., circuitry 202 for PWM) may generate or obtain pulse signals within a time interval 350 of a horizontal synchronization signal, based on the bit sequence, which is '1101110111'. For example, the circuitry for PWM may generate a pulse signal 361 having a width 381 based on an MSB of the bit sequence, which is '1101110111', generate a pulse signal 362 having a width 382 based on a 2^{nd} MSB of the bit sequence, which is '1101110111', generate a pulse signal 364 having a width 384 based on a 4^{th} MSB of the bit sequence, which is '1101110111', generate a pulse signal 365 having a width 385 based on a 5^{th} MSB of the bit sequence, which is '1101110111', generate a pulse signal 366 having a width 386 based on a 6^{th} MSB of the bit sequence, which is '1101110111', generate a pulse signal 368 having a width 388 based on an 8^{th} MSB of the bit sequence, which is '1101110111', generate a pulse signal 369 having a width 389 based on a 9^{th} MSB of the bit sequence, which is '1101110111', and generate a pulse signal 370 having a width 390 based on an LSB of the bit sequence, which is '1101110111'.

For example, circuitry for PWM (e.g., circuitry 202 for PWM) may generate or obtain pulse signals based on the bit sequence, which is '11011101'. For example, the circuitry for PWM may generate a pulse signal 361 having a width 381 based on an MSB of the bit sequence, which is '11011101', generate a pulse signal 362 having a width 382 based on a 2^{nd} MSB of the bit sequence, which is '11011101', generate a pulse signal 364 having a width 384 based on a 4^{th} MSB of the bit sequence, which is '11011101', generate a pulse signal 365 having a width 385 based on a 5^{th} MSB of the bit sequence, which is '11011101', generate a pulse signal 366 having a width 386 based on a 6^{th} MSB of the bit sequence, which is '11011101', and generate a pulse signal 368 having a width 388 based on an LSB of the bit sequence, which is '11011101'.

For example, a light emission element used for displaying of the first portion 301 of the image 300 (e.g., one light emission element from among the first light emission elements 203-L) may be emitted based on the pulse signal 361, the pulse signal 362, the pulse signal 364, the pulse signal 365, the pulse signal 366, the pulse signal 368, the pulse signal 369, and the pulse signal 370. For example, the light emission element may be emitted for a time 391 corresponding to the width 381 and the width 382 within the time interval 350, be emitted for a time 392 corresponding to the width 384, the width 385, and the width 386, and be emitted for a time 393 corresponding to the width 368, the width 369, and the width 370.

For example, a light emission element used for displaying the second portion 302 of the image 300 (e.g., one light emission element from among the second light emission elements 203-M) may be emitted based on the pulse signal 361, the pulse signal 362, the pulse signal 364, the pulse signal 365, the pulse signal 366, and the pulse signal 368. For example, the light emission element may be emitted for a time 391 corresponding to the width 381 and the width 382 within the time interval 350, be emitted for a time 392 corresponding to the width 384, the width 385, and the width 386, and be emitted for a time 394 corresponding to the width 368.

For example, since a bit depth of the bit sequence (e.g., '1101110111') provided for the light emission element for displaying of the first portion 301 of the image 300 is higher than a bit depth of the bit sequence (e.g., '11011101') provided for the light emission element for displaying of the second portion 302 of the image 300, the light emission element for displaying of the first portion 301 of the image 300 may be emitted more than the light emission element for displaying of the second portion 302 of the image 300, for a time 395. For example, since the light emission element for displaying of the first portion 301 of the image 300 is emitted more than the light emission element for displaying of the second portion 302 of the image 300 for the time 395, a quality of the first portion 301 of the image 300 displayed on the display 120 may be higher than a quality of the second portion 302 of the image 300 displayed on the display 120. For example, the first portion 301 of the image 300 may have a higher color gamut (e.g., sRGB (REC-709), P3, or REC-2020)than the second portion 302 of the image 300, a richer gradation level than the second portion 302 of the image 300, a higher resolution (e.g., FHD or 4K) than the second portion 302 of the image 300, and/or a higher luminance (e.g., a standard dynamic range (SDR) or a high dynamic range (HDR)) than the second portion 302 of the image 300. For example, the display 120 may provide enhanced visibility at a low grayscale (or low gray-level). For example, the display 120 may provide enhanced visibility at a low luminance.

Referring back to FIG. 3A, as a non-limiting example, the image 300 may further include a third portion 303. For example, the third portion 303 may be positioned between the first portion 301 and the second portion 302. For example, the third portion 303 may have a resolution between a resolution of the first portion 301 and a resolution of the second portion 302. For example, grayscale represented in the third portion 303 may be less rich than grayscale of the first portion 301 and richer than grayscale of the second portion 302.

For example, the display 120 may display the third portion 303 of the image 300 by emitting each of third light emission elements (not illustrated in FIG. 3A) for displaying of the third portion 303 of the image 300 in accordance with the PWM scheme by using each of third bit sequences (not illustrated in FIG. 3A). For example, a bit depth of each of the third bit sequences may be higher than a bit depth of each of the second bit sequences 320 and lower than a bit depth of each of the first bit sequences 310.

Referring back to FIG. 1, a maximum storage size (or maximum storage capacity) of each of the plurality of memory cells 122 may be larger than a size of each of the first bit sequences. As a non-limiting example, the maximum storage size of each of the plurality of memory cells 122 may correspond to or may be identical to the size of each of the second bit sequences. For example, the display 120 may further include memory 123 for storing one or more bits (e.g., the one or more bits 312 of FIG. 3A and/or the LSB and the 9^{th} MSB of the bit sequence, which is '1101110111', of FIG. 3B) further included in each of the first bit sequences with respect to each of the second bit sequences. The memory 123 may be referred to as side memory.

A method of using the memory 123 may be variously implemented in the display 120.

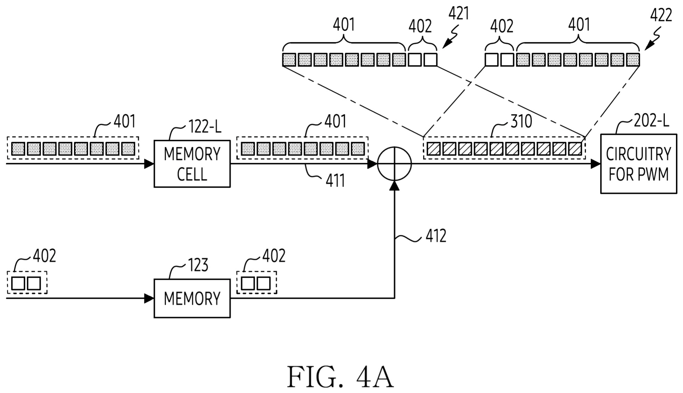

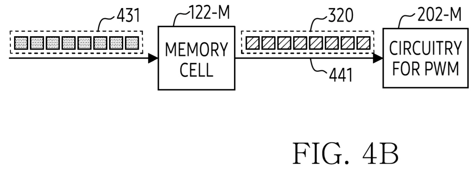

For example, the display 120 may obtain each of the first bit sequences by adding the one or more bits obtained from the memory 123 to each of bit sequences of a first set obtained from a portion of the plurality of memory cells 122. For example, the display 120 may obtain each of the second bit sequences from another portion of the plurality of memory cells 122 without using the memory 123 (or by bypassing obtaining the one or more bits from the memory 123). Obtaining each of the first bit sequences may be exemplified in the description of FIG. 4A, and obtaining each of the second bit sequences may be exemplified in the description of FIG. 4B.

FIG. 4A illustrates an example of obtaining each of first bit sequences by adding one or more bits obtained from memory to each of bit sequences of a first set obtained from a portion of a plurality of memory cells.

FIG. 4B illustrates an example of obtaining each of second bit sequences from another portion of a plurality of memory cells.

Referring to FIG. 4A, the display 120 may obtain each of a plurality of bit sequences from the information regarding the image received from the processor 110. For example, the display 120 may store each of the plurality of bit sequences in a plurality of memory cells 122. For example, the display 120 may obtain each of the plurality of bit sequences from each of the plurality of memory cells 122 after the storing. For example, the display 120 may store one or more bits 402 obtained from the processor 110 (or one or more bits 402 obtained from the information received from the processor 110) in the memory 123 in accordance with the address information. For example, as indicated by arrows 411 and 412, the display 120 may obtain each of first bit sequences 310, by adding one or more bits 402 to each of bit sequences 401 of a first set obtained from a portion 122-L of the plurality of memory cells 122 respectively connected to a first light emission elements 203-L. For example, the one or more bits 402 in the first bit sequences 310 may be positioned behind (or to the right of) an LSB of each of the bit sequences 401 of the first set, as in a state 421. For example, the one or more bits 402 in the first bit sequences 310 may be positioned in front of (or to the left of) an MSB of each of the bit sequences 401 of the first set, as in a state 422. For example, the display 120 may emit each of the first light emission elements 203-L by providing each of the first bit sequences 310 to circuitry 202-L for PWM.

Referring to FIG. 4B, as indicated by an arrow 441, the display 120 may obtain each of second bit sequences 320 by bypassing adding the one or more bits (e.g., the one or more bits 402) to each of bit sequences 431 of a second set obtained from another portion 122-M of the plurality of memory cells 122 connected to a second light emission elements 203-M. For example, obtaining each of the second bit sequences 320 by bypassing adding the one or more bits (e.g., the one or more bits 402) to each of the bit sequences 431 of the second set may indicate obtaining the second bit sequences 320, which are the bit sequences 431 of the second set, from the another portion 122-M of the plurality of memory cells 122 without using the memory 123. However, it is not limited thereto. For example, obtaining each of the second bit sequences 320 by bypassing adding the one or more bits (e.g., the one or more bits 402) to each of the bit sequences 431 of the second set may also indicate obtaining the second bit sequences 320 by adding one or more bits, which are null, to each of the bit sequences 431 of the second set. For example, the display 120 may emit each of the second light emission elements 203-M by providing each of the second bit sequences 320 to circuitry 202-M for PWM.

For example, the display 120 may display the image (e.g., the image 300) based on the emission of each of the first light emission elements 203-L and the emission of each of the second light emission elements 203-M.

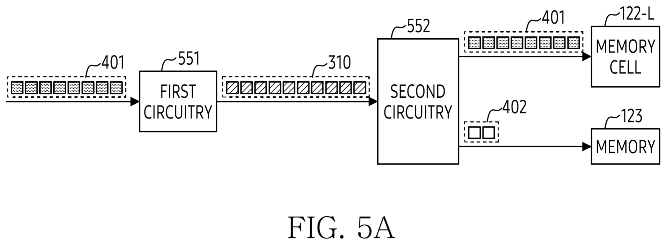

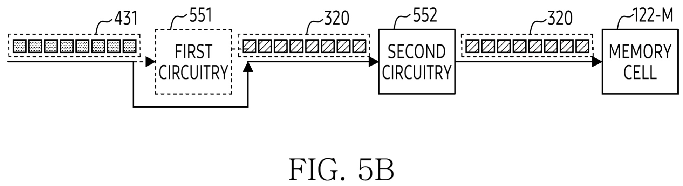

Referring back to FIG. 1, unlike the examples of FIGS. 4A and 4B, the display 120 may obtain, before executing of storage in a portion of the plurality of memory cells 122, each of the first bit sequences by adding the one or more bit sequences to each of the bit sequences 401 of the first set obtained based on the information regarding the image received from the processor 110, store a portion of each of the first bit sequences in the memory 123, and store a remaining portion of each of the first bit sequences in the portion of the plurality of memory cells 122 connected to the first light emission elements. For example, the display 120 may store the second bit sequences, which are the bit sequences 431 of the second set, in the another portion of the plurality of memory cells 122 connected to the second light emission elements. Storing the portion of each of the first bit sequences in the memory 123 and storing the remaining portion of each of the first bit sequences in the portion of the plurality of memory cells 122 may be exemplified the description of FIG. 5A, and storing the second bit sequences in the another portion of the plurality of memory cells 122 may be exemplified in the description of FIG. 5B.

FIG. 5A illustrates an example of storing each of first bit sequences obtained using first circuitry, in a memory cell and memory through second circuitry.

FIG. 5B illustrates an example of storing each of second bit sequences in a memory cell through second circuitry.

Referring to FIG. 5A, the display 120 may obtain, from the information regarding the image received from the processor 110, a plurality of bit sequences. For example, the display 120 may include first circuitry 551 for obtaining each of first bit sequences 310 by extending or expanding each of bit sequences 401 of a first set to be at least partially stored in a portion 122-L of the plurality of memory cells 122 connected to a first light emission elements 203-L from among the plurality of bit sequences, and second circuitry 552 for storing a portion of the first bit sequences 310 in the memory 123 and storing a remaining portion of the first bit sequences 310 in the portion 122-L of the plurality of memory cells 122. For example, the display 120 may extend each of the bit sequences 401 of the first set to be stored in the portion 122-L of the plurality of memory cells 122, by using the first circuitry 551. For example, the display 120 may obtain each of the first bit sequences 310 extended from each of the bit sequences 401 of the first set by adding one or more bits 402 to each of the bit sequences 401 of the first set. For example, the one or more bits 402 may be generated by the processor 110 and may be provided to the display 120 from the processor 110. For example, the one or more bits 402 may also be generated by the display 120 based on the address information (or command) from the processor 110. For example, the display 120 may divide each of the first bit sequences 310 by using the second circuitry 552, store the portion of each of the first bit sequences 310 obtained according to the division in the memory 123, and store the remaining portion of each of the first bit sequences 310 obtained according to the division in the portion 122-L of the plurality of memory cells 122. As a non-limiting example, the portion of each of the first bit sequences 310 may be the one or more bits 402, and the remaining portion of each of the first bit sequences 310 may be the bit sequences 401 of the first set. Although not illustrated in FIG. 5A, the display 120 may emit each of the first light emission elements 203-L by providing, to circuitry 202-L for PWM, each of the first bit sequences 310 obtained by adding a portion of each of the first bit sequences 310 obtained from the memory 123 to the remaining portion of each of the first bit sequences 310 obtained from the portion 122-L of the plurality of memory cells 122, as illustrated in FIG. 4A.

Referring to FIG. 5B, the display 120 may obtain, as second bit sequences 320, bit sequences 431 of a second set to be stored in another portion 122-M of the plurality of memory cells 122 respectively connected to a second light emission elements 203-M from among the plurality of bit sequences, without using the first circuitry 551 (or by bypassing the first circuitry 551). For example, the display 120 may store each of the second bit sequences 320 in the another portion 122-M of the plurality of memory cells 122 by using the second circuitry 552 (or without using the second circuitry 552). Although not illustrated in FIG. 5B, the display 120 may emit each of the second light emission elements 203-M by providing each of the second bit sequences 320 to circuitry 202-M for PWM, as illustrated in FIG. 4B.

For example, the display 120 may display the image (e.g., the image 300) based on the emission of each of the first light emission elements 203-L and the emission of each of the second light emission elements 203-M.

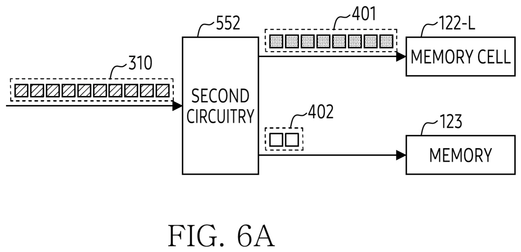

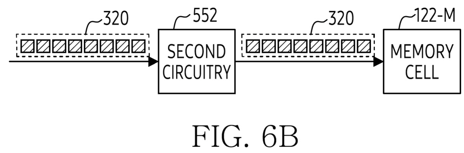

Referring back to FIG. 1, unlike the examples of FIGS. 4A to 5B, the display 120 may obtain, from the information regarding the image received from processor 110, a plurality of bit sequences including the first bit sequences and the second bit sequences. For example, the display 120 may store a portion of each of the first bit sequences in the memory 123, and store a remaining portion of each of the first bit sequences in memory cells of a first set, which is a portion of the plurality of memory cells 122 connected to the first light emission element. For example, the display 120 may store each of the second bit sequences in each of memory cells 122 of a second set, which are another portion 122-M of the plurality of memory cells 122 respectively connected to the second light emission elements. Storing the portion of each of the first bit sequences in the memory 123 and storing the remaining portion of each of the first bit sequences in each of the memory cells of the first set may be exemplified in the description of FIG. 6A, and storing the second bit sequences in each of the memory cells of the second set may be exemplified in the description of FIG. 6B.

FIG. 6A illustrates an example of storing each of first bit sequences in a memory cell and memory through second circuitry.

FIG. 6B illustrates an example of storing each of second bit sequences in a memory cell and memory through second circuitry.

Referring to FIG. 6A, the display 120 may obtain each of first bit sequences 310 from the information regarding the image, divide each of the first bit sequences 310 by using the second circuitry 552, store the portion of each of the first bit sequences 310 obtained according to the division in the memory 123, and store the remaining portion of each of the first bit sequences 310 obtained according to the division in each of memory cells 122-L of a first set (or in a portion 122-L of a plurality of memory cells 122). As a non-limiting example, the portion of each of the first bit sequences 310 may be one or more bits 402, and the remaining portion of each of the first bit sequences 310 may be bit sequences 401 of a first set. Although not illustrated in FIG. 6A, the display 120 may emit each of first light emission elements 203-L by providing, to circuitry 202-L for PWM, each of the first bit sequences 310 obtained by adding a portion of each of the first bit sequences 310 obtained from the memory 123 to the remaining portion of each of the first bit sequences 310 obtained from each of the memory cells 122-L of the first set, as illustrated in FIG. 4A.

Referring to FIG. 6B, the display 120 may store each of second bit sequences 320 in each of memory cells 122-M of a second set (or in another portion 122-M of a plurality of memory cells 122) using the second circuitry 552 (or without using the second circuitry 552). Although not illustrated in FIG. 6B, the display 120 may emit each of the second light emission elements 203-M by providing each of the second bit sequences 320 to circuitry 202-M for PWM, as illustrated in FIG. 4B.

For example, the display 120 may display the image (e.g., the image 300) based on the emission of each of the first light emission elements 203-L and the emission of each of the second light emission elements 203-M.

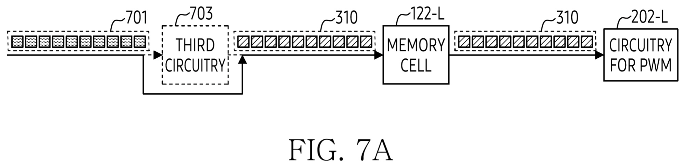

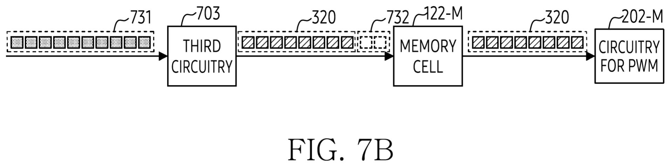

Referring back to FIG. 1, the display 120 may include only the plurality of memory cells 122, without the memory 123. For example, when the display 120 does not include the memory 123, a maximum storage size of each of the plurality of memory cells 122 may correspond to a size of each of the first bit sequences. Operations for displaying the image using the first bit sequences and the second bit sequences when the display 120 does not include the memory 123 may be exemplified in the descriptions of FIG. 7A and FIG. 7B.

FIG. 7A illustrates an example of storing each of bit sequences of a first set, as each of first bit sequences, in memory cell through first circuitry.

FIG. 7B illustrates an example of storing each of second bit sequences obtained by removing one or more bits from each of bit sequences of a second set, in memory cell through first circuitry.

Referring to FIG. 7A, the display 120 may obtain a plurality of bit sequences from the information regarding the image received from the processor 110. For example, the display 120 may identify bit sequences 701 of a first set and bit sequences of a second set (e.g., bit sequences 731 of the second set of FIG. 7B) from among the plurality of bit sequences. For example, the display 120 may store, as first bit sequences 310, each of the bit sequences 701 of the first set in each of memory cells 122-L of a first set, which are a portion of the plurality of memory cells 122 connected to the first light emission elements 203-L, through third circuitry 703 (or by bypassing use of the third circuitry 703). For example, storing the bit sequences 701 of the first set, as the first bit sequences 310, in each of the memory cells 122-L of the first set by bypassing use of the third circuitry 703 may indicate storing the first bit sequences 310, which are the bit sequences 701 of the first set, in each of the memory cells 122-L of the first set without using the third circuitry 703. For example, the display 120 may emit each of the first light emission elements 203-L by providing each of the first bit sequences 310 obtained from each of the memory cells 122-L of the first set to circuitry 202-L for PWM.

Referring to FIG. 7B, the display 120 may include third circuitry 703 for removing one or more bits 732 from bit sequences 731 of a second set from among the plurality of bit sequences. For example, the display 120 may obtain second bit sequences 320 by removing the one or more bits 732 from the bit sequences 731 of the second set by using the third circuitry 703. For example, the display 120 may store each of the second bit sequences 320 in each of memory cells 122-M of a second set, which are another portion of the plurality of memory cells 122 connected to the second light emission elements 203-M. For example, the display 120 may emit each of the second light emission elements 203-M by providing each of the second bit sequences 320 obtained from each of the memory cells 122-M of the second set to circuitry 202-M for PWM.

For example, the display 120 may display the image (e.g., the image 300) based on the emission of each of the first light emission elements 203-L and the emission of each of the second light emission elements 203-M.

Referring back to FIG. 1, the display 120 may adaptively execute displaying the image using the first bit sequences and the second bit sequences based on a condition. For example, the condition may be variously implemented.

For example, the display 120 may display, while a remaining capacity of a rechargeable battery of the wearable device 100 is less than a reference capacity, the image by emitting each of the first light emission elements in accordance with the PWM scheme using each of the first bit sequences and emitting each of the second light emission elements in accordance with the PWM scheme using each of the second bit sequences. For example, the display 120 may display, while the remaining capacity is greater than or equal to the reference capacity, the image by emitting each of the first light emission elements in accordance with the PWM scheme using each of the first bit sequences and emitting each of the second light emission elements in accordance with the PWM scheme using each of third bit sequences having a bit depth identical to a bit depth of each of the first bit sequences. For example, the third bit sequences may be distinguished from third bit sequences described in the description of the third portion 303 of the image 300 of FIG. 3A.

For example, the display 120 may display, while a brightness level of a portion of an environment around the wearable device 100 provided with the image is lower than a reference brightness level, the image by emitting each of the first light emission elements in accordance with the PWM scheme using each of the first bit sequences and emitting each of the second light emission elements in accordance with the PWM scheme using each of the second bit sequences. For example, the display 120 may display, while the brightness level is equal to or higher than the reference brightness level, the image by emitting each of the first light emission elements in accordance with the PWM scheme using each of the first bit sequences and emitting each of the second light emission elements in accordance with the PWM scheme using each of third bit sequences having a bit depth identical to the bit depth of each of the first bit sequences. For example, the third bit sequences may be distinguished from the third bit sequences described in the description of the third portion 303 of the image 300 of FIG. 3A.

For example, based on user settings for displaying of the image, settings of a software application for displaying of the image, and/or a state related to execution of the software application, the display 120 may display the image by emitting each of the first light emission elements in accordance with the PWM scheme using each of the first bit sequences and emitting each of the second light emission elements in accordance with the PWM scheme using each of the second bit sequences, or display the image by emitting each of the first light emission elements in accordance with the PWM scheme using each of the first bit sequences and emitting each of the second light emission elements in accordance with the PWM scheme using each of third bit sequences having a bit depth identical to a bit depth of each of the first bit sequences. For example, the third bit sequences may be distinguished from the third bit sequences described in the description of the third portion 303 of the image 300 of FIG. 3A.

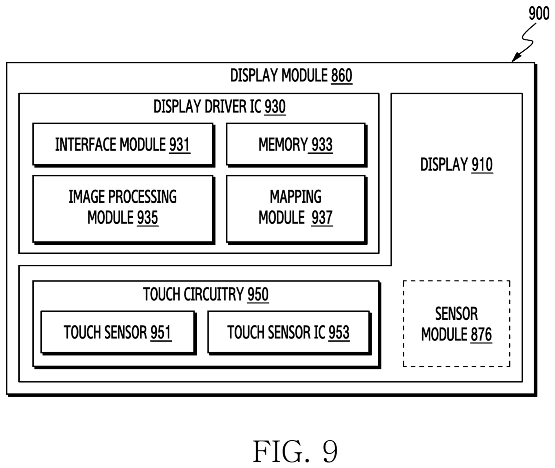

The examples described above may be implemented in an electronic device exemplified in FIGS. 8 and 9.

FIG. 8 is a block diagram illustrating an electronic device 801 in a network environment 800 according to various embodiments. Referring to FIG. 8, the electronic device 801 in the network environment 800 may communicate with an electronic device 802 via a first network 898 (e.g., a short-rdange wireless communication network), or at least one of an electronic device 804 or a server 808 via a second network 899 (e.g., a long-range wireless communication network). According to an embodiment, the electronic device 801 may communicate with the electronic device 804 via the server 808. According to an embodiment, the electronic device 801 may include a processor 820, memory 830, an input module 850, a sound output module 855, a display module 860, an audio module 870, a sensor module 876, an interface 877, a connecting terminal 878, a haptic module 879, a camera module 880, a power management module 888, a battery 889, a communication module 890, a subscriber identification module(SIM) 896, or an antenna module 897. In some embodiments, at least one of the components (e.g., the connecting terminal 878) may be omitted from the electronic device 801, or one or more other components may be added in the electronic device 801. In some embodiments, some of the components (e.g., the sensor module 876, the camera module 880, or the antenna module 897) may be implemented as a single component (e.g., the display module 860).

The processor 820 may execute, for example, software (e.g., a program 840) to control at least one other component (e.g., a hardware or software component) of the electronic device 801 coupled with the processor 820, and may perform various data processing or computation. According to an embodiment, as at least part of the data processing or computation, the processor 820 may store a command or data received from another component (e.g., the sensor module 876 or the communication module 890) in volatile memory 832, process the command or the data stored in the volatile memory 832, and store resulting data in non-volatile memory 834. According to an embodiment, the processor 820 may include a main processor 821 (e.g., a central processing unit (CPU) or an application processor (AP)), or an auxiliary processor 823 (e.g., a graphics processing unit (GPU), a neural processing unit (NPU), an image signal processor (ISP), a sensor hub processor, or a communication processor (CP)) that is operable independently from, or in conjunction with, the main processor 821. For example, when the electronic device 801 includes the main processor 821 and the auxiliary processor 823, the auxiliary processor 823 may be adapted to consume less power than the main processor 821, or to be specific to a specified function. The auxiliary processor 823 may be implemented as separate from, or as part of the main processor 821.

The auxiliary processor 823 may control at least some of functions or states related to at least one component (e.g., the display module 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). According to an embodiment, the auxiliary processor 823 (e.g., an image signal processor or a communication processor) may be implemented as part of another component (e.g., the camera module 880 or the communication module 890) functionally related to the auxiliary processor 823. According to an embodiment, the auxiliary processor 823 (e.g., the neural processing unit) may include a hardware structure specified for artificial intelligence model processing. An artificial intelligence model may be generated by machine learning. Such learning may be performed, e.g., by the electronic device 801 where the artificial intelligence is performed or via a separate server (e.g., the server 808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 830 may store various data used by at least one component (e.g., the processor 820 or the sensor module 876) of the electronic device 801. The various data may include, for example, software (e.g., the program 840) and input data or output data for a command related thereto. The memory 830 may include the volatile memory 832 or the non-volatile memory 834.

The program 840 may be stored in the memory 830 as software, and may include, for example, an operating system (OS) 842, middleware 844, or an application 846.

The input module 850 may receive a command or data to be used by another component (e.g., the processor 820) of the electronic device 801, from the outside (e.g., a user) of the electronic device 801. The input module 850 may include, for example, a microphone, a mouse, a keyboard, a key (e.g., a button), or a digital pen (e.g., a stylus pen).

The sound output module 855 may output sound signals to the outside of the electronic device 801. The sound output module 855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 860 may visually provide information to the outside (e.g., a user) of the electronic device 801. The display module 860 may include, for example, a display, a hologram device, or a projector and control circuitry to control a corresponding one of the display, hologram device, and projector. According to an embodiment, the display module 860 may include a touch sensor adapted to detect a touch, or a pressure sensor adapted to measure the intensity of force incurred by the touch.

The audio module 870 may convert a sound into an electrical signal and vice versa. According to an embodiment, the audio module 870 may obtain the sound via the input module 850, or output the sound via the sound output module 855 or a headphone of an external electronic device (e.g., an electronic device 802) directly (e.g., wiredly) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. According to an embodiment, the sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device (e.g., the electronic device 802) directly (e.g., wiredly) or wirelessly. According to an embodiment, the interface 877 may include, for example, a high definition multimedia interface (HDMI), a universal serial bus (USB) interface, a secure digital (SD) card interface, or an audio interface.

A connecting terminal 878 may include a connector via which the electronic device 801 may be physically connected with the external electronic device (e.g., the electronic device 802). According to an embodiment, the connecting terminal 878 may include, for example, an HDMI connector, a USB connector, an SD card connector, or an audio connector (e.g., a headphone connector).

The haptic module 879 may convert an electrical signal into a mechanical stimulus (e.g., a vibration or a movement) or electrical stimulus which may be recognized by a user via his tactile sensation or kinesthetic sensation. According to an embodiment, the haptic module 879 may include, for example, a motor, a piezoelectric element, or an electric stimulator.

The camera module 880 may capture a still image or moving images. According to an embodiment, the camera module 880 may include one or more lenses, image sensors, image signal processors, or flashes.

The power management module 888 may manage power supplied to the electronic device 801. According to an embodiment, the power management module 888 may be implemented as at least part of, for example, a power management integrated circuit (PMIC).

The battery 889 may supply power to at least one component of the electronic device 801. According to an embodiment, the battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the application processor (AP)) and supports a direct (e.g., wired) communication or a wireless communication. According to an embodiment, the communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as Bluetooth^{™}, wireless-fidelity (Wi-Fi) direct, or infrared data association (IrDA)) or the second network 899 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The wireless communication module 892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 892 may support a high-frequency band (e.g., the mmWave band) to achieve, e.g., a high data transmission rate. The wireless communication module 892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 892 may support various requirements specified in the electronic device 801, an external electronic device (e.g., the electronic device 804), or a network system (e.g., the second network 899). According to an embodiment, the wireless communication module 892 may support a peak data rate (e.g., 20Gbps or more) for implementing eMBB, loss coverage (e.g., 864dB or less) for implementing mMTC, or U-plane latency (e.g., 0.5ms or less for each of downlink (DL) and uplink (UL), or a round trip of 8ms or less) for implementing URLLC.

The antenna module 897 may transmit or receive a signal or power to or from the outside (e.g., the external electronic device) of the electronic device 801. According to an embodiment, the antenna module 897 may include an antenna including a radiating element composed of a conductive material or a conductive pattern formed in or on a substrate (e.g., a printed circuit board (PCB)). According to an embodiment, the antenna module 897 may include a plurality of antennas (e.g., array antennas). In such a case, at least one antenna appropriate for a communication scheme used in the communication network, such as the first network 898 or the second network 899, may be selected, for example, by the communication module 890 (e.g., the wireless communication module 892) from the plurality of antennas. The signal or the power may then be transmitted or received between the communication module 890 and the external electronic device via the selected at least one antenna. According to an embodiment, another component (e.g., a radio frequency integrated circuit (RFIC)) other than the radiating element may be additionally formed as part of the antenna module 897.

According to various embodiments, the antenna module 897 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 801 and the external electronic device 804 via the server 808 coupled with the second network 899. Each of the electronic devices 802 or 804 may be a device of a same type as, or a different type, from the electronic device 801. According to an embodiment, all or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 801. The electronic device 801 may provide the outcome, with or without further processing of the outcome, as at least part of a reply to the request. To that end, a cloud computing, distributed computing, mobile edge computing (MEC), or client-server computing technology may be used, for example. The electronic device 801 may provide ultra low-latency services using, e.g., distributed computing or mobile edge computing. In another embodiment, the external electronic device 804 may include an internet-of-things (IoT) device. The server 808 may be an intelligent server using machine learning and/or a neural network. According to an embodiment, the external electronic device 804 or the server 808 may be included in the second network 899. The electronic device 801 may be applied to intelligent services (e.g., smart home, smart city, smart car, or healthcare) based on 5G communication technology or IoT-related technology.

FIG. 9 is a block diagram 900 illustrating the display module 860 according to various embodiments. Referring to FIG. 9, the display module 860 may include a display 910 and a display driver integrated circuit (DDI) 930 to control the display 910. The DDI 930 may include an interface module 931, memory 933 (e.g., buffer memory), an image processing module 935, or a mapping module 937. The DDI 930 may receive image information that contains image data or an image control signal corresponding to a command to control the image data from another component of the electronic device 801 via the interface module 931. For example, according to an embodiment, the image information may be received from the processor 820 (e.g., the main processor 821 (e.g., an application processor)) or the auxiliary processor 823 (e.g., a graphics processing unit) operated independently from the function of the main processor 821. The DDI 930 may communicate, for example, with touch circuitry 950 or the sensor module 876 via the interface module 931. The DDI 930 may also store at least part of the received image information in the memory 933, for example, on a frame by frame basis. The image processing module 935 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 910. The mapping module 937 may generate a voltage value or a current value corresponding to the image data preprocessed or post-processed by the image processing module 935. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 910 may be driven, for example, based at least in part on the voltage value or the current value such that visual information (e.g., a text, an image, or an icon) corresponding to the image data may be displayed via the display 910.

According to an embodiment, the display module 860 may further include the touch circuitry 950. The touch circuitry 950 may include a touch sensor 951 and a touch sensor IC 953 to control the touch sensor 951. The touch sensor IC 953 may control the touch sensor 951 to sense a touch input or a hovering input with respect to a certain position on the display 910. To achieve this, for example, the touch sensor 951 may detect (e.g., measure) a change in a signal (e.g., a voltage, a quantity of light, a resistance, or a quantity of one or more electric charges) corresponding to the certain position on the display 910. The touch circuitry 950 may provide input information (e.g., a position, an area, a pressure, or a time) indicative of the touch input or the hovering input detected via the touch sensor 951 to the processor 820. According to an embodiment, at least part (e.g., the touch sensor IC 953) of the touch circuitry 950 may be formed as part of the display 910 or the DDI 930, or as part of another component (e.g., the auxiliary processor 823) disposed outside the display module 860.

According to an embodiment, the display module 860 may further include at least one sensor (e.g., a fingerprint sensor, an iris sensor, a pressure sensor, or an illuminance sensor) of the sensor module 876 or a control circuit for the at least one sensor. In such a case, the at least one sensor or the control circuit for the at least one sensor may be embedded in one portion of a component (e.g., the display 910, the DDI 930, or the touch circuitry 950)) of the display module 860. For example, when the sensor module 876 embedded in the display module 860 includes a biometric sensor (e.g., a fingerprint sensor), the biometric sensor may obtain biometric information (e.g., a fingerprint image) corresponding to a touch input received via a portion of the display 910. As another example, when the sensor module 876 embedded in the display module 860 includes a pressure sensor, the pressure sensor may obtain pressure information corresponding to a touch input received via a partial or whole area of the display 910. According to an embodiment, the touch sensor 951 or the sensor module 876 may be disposed between pixels in a pixel layer of the display 910, or over or under the pixel layer.

As described above, a wearable device 100 may comprise a display 120 including a driving layer formed at a silicon substrate, and an emission layer on the driving layer, and a processor 110. According to an embodiment, the display 120 may be configured to receive, from the processor 110, via the driving layer, information regarding an image 300. According to an embodiment, the display 120 may be configured to, using each of first bit sequences 310, emit, in accordance with a pulse width modulation (PWM) scheme, each of first light emission elements in the emission layer for displaying of a first portion 301 of the image 300 identified in accordance with a gaze of a user wearing the wearable device 100. According to an embodiment, the display 120 may be configured to, using each of second bit sequences 320, emit, in accordance with the PWM scheme, each of second light emission elements in the emission layer for displaying of a second portion 302 of the image 300 around the first portion 301 of the image 300. According to an embodiment, the display 120 may be configured to, based on the emission of each of the first light emission elements and the emission of each of the second light emission elements, display the image 300. According to an embodiment, a bit depth of each of the first bit sequences 310 may be higher than a bit depth of each of the second bit sequences 320.

According to an embodiment, the display 120 may include a plurality of light emission elements including the first and second light emission elements, and a plurality of memory cells respectively connected to the plurality of light emission elements. According to an embodiment, the display 120 may be configured to store, in each of the plurality of memory cells, each of a plurality of bit sequences obtained from the information received from the processor 110. According to an embodiment, the display 120 may be configured to obtain each of the plurality of bit sequences from each of the plurality of memory cells. According to an embodiment, the display 120 may be configured to obtain each of the first bit sequences 310 by adding one or more bits to each of bit sequences of a first set obtained from a portion of the plurality of memory cells respectively connected to the first light emission elements. According to an embodiment, the display 120 may be configured to obtain each of the second bit sequences 320 by bypassing adding the one or more bits to each of bit sequences of a second set obtained from another portion of the plurality of memory cells respectively connected to the second light emission elements. According to an embodiment, the display 120 may be configured to, using each of the first bit sequences 310, emit each of the first light emission elements. According to an embodiment, the display 120 may be configured to, using each of the second bit sequences 320, emit each of the second light emission elements.

According to an embodiment, the one or more bits in each of the first bit sequences 310 may be positioned behind the least significant bit (LSB) of each of the bit sequences of the first set.

According to an embodiment, the one or more bits in each of the first bit sequences 310 may be positioned in front of the most significant bit (MSB) of each of the bit sequences of the first set.

According to an embodiment, each of the plurality of light emission elements may be respectively connected to each of the plurality of memory cells through circuitry for pulse width modulation. According to an embodiment, the display 120 may be configured to, by providing each of the first bit sequences 310 to the circuitry connected to each of the first light emission elements, emit each of the first light emission elements. According to an embodiment, the display 120 may be configured to, by providing each of the second bit sequences 320 to the circuitry connected to each of the second light emission elements, emit each of the second light emission elements.

According to an embodiment, the display 120 may include memory different from the plurality of memory cells. According to an embodiment, the one or more bits may be obtained from the memory.

According to an embodiment, a size of each of the first bit sequences 310 may be larger than a maximum storage size of each of the plurality of memory cells.

According to an embodiment, the display 120 may include a plurality of light emission elements including the first and second light emission elements, a plurality of memory cells respectively connected to the plurality of light emission elements, and memory different from the plurality of memory cells. According to an embodiment, memory cells of a first set respectively connected to the first light emission elements from among the plurality of memory cells may be used for obtaining each of the first bit sequences 310 in conjunction with the memory. According to an embodiment, memory cells of a second set respectively connected to the second light emission elements from among the plurality of memory cells may be used for obtaining each of the second bit sequences 320. According to an embodiment, the memory may be used for obtaining the first bit sequences 310 from among the first bit sequences 310 and the second bit sequences 320. According to an embodiment, the memory may not be used for obtaining the second bit sequences 320.

According to an embodiment, the display 120 may include a plurality of light emission elements including the first light emission elements and the second light emission elements, a plurality of memory cells respectively connected to the plurality of light emission elements, and memory different from the plurality of memory cells. According to an embodiment, the plurality of memory cells may include memory cells of a first set respectively connected to the first light emission elements, and memory cells of a second set respectively connected to the second light emission elements. According to an embodiment, the display 120 may be configured to obtain the first bit sequences 310 by adding one or more bits obtained from the memory to each of bit sequences of a first set respectively obtained from the memory cells of the first set, and emit each of the first light emission elements by using each of the first bit sequences 310. According to an embodiment, the display 120 may be configured to obtain, as the second bit sequences 320, bit sequences of a second set respectively obtained from the memory cells of the second set, and emit each of the second light emission elements by using each of the second bit sequences 320.

According to an embodiment, the display 120 may include a plurality of light emission elements including the first light emission elements and the second light emission elements, a plurality of memory cells respectively connected to the plurality of light emission elements, and memory different from the plurality of memory cells. According to an embodiment, the display 120 may be configured to obtain a plurality of bit sequences from the information received from the processor 110. According to an embodiment, the display 120 may be configured to, by adding one or more bits to each of bit sequences of a first set to be stored in a portion of the plurality of memory cells respectively connected to the first light emission elements from among the plurality of bit sequences, obtain each of first bit sequences 310. According to an embodiment, the display 120 may be configured to obtain, as the second bit sequences 320, bit sequences of a second set to be stored in another portion of the plurality of memory cells respectively connected to the second light emission elements from among the plurality of bit sequences. According to an embodiment, the display 120 may be configured to store, in the memory, the one or more bits which are a portion of each of the first bit sequences 310. According to an embodiment, the display 120 may be configured to store, in each of memory cells of a first set which is the portion of the plurality of memory cells, each of the bit sequences of the first set which is a remaining portion of each of the first bit sequences 310. According to an embodiment, the display 120 may be configured to store, in each of memory cells of a second set which is the another portion of the plurality of memory cells, each of the second bit sequences 320. According to an embodiment, the display 120 may be configured to emit each of the first light emission elements, by using each of the first bit sequences 310 obtained by adding the one or more bits obtained from the memory to each of the bit sequences of the first set obtained from each of the memory cells of the first set. According to an embodiment, the display 120 may be configured to emit each of the second light emission elements, by using each of the second bit sequences 320 obtained from each of the memory cells of the second set.

According to an embodiment, the display 120 may include a plurality of light emission elements including the first light emission elements and the second light emission elements, a plurality of memory cells respectively connected to the plurality of light emission elements, and memory different from the plurality of memory cells. According to an embodiment, the display 120 may be configured to obtain, from the information received from the processor 110, a plurality of bit sequences including the first bit sequences 310 and the second bit sequences 320. According to an embodiment, the display 120 may be configured to store, in the memory, a portion of each of the first bit sequences 310. According to an embodiment, the display 120 may be configured to store, in each of memory cells of a first set which is a portion of the plurality of memory cells respectively connected to the first light emission elements, a remaining portion of each of the first bit sequences 310. According to an embodiment, the display 120 may be configured to store, in each of memory cells of a second set which is another portion of the plurality of memory cells respectively connected to the second light emission elements, each of the second bit sequences 320. According to an embodiment, the display 120 may be configured to emit each of the first light emission elements, by using each of the first bit sequences 310 obtained by adding the portion of each of the first bit sequences 310 obtained from the memory to the remaining portion of each of the first bit sequences 310 obtained from each of the memory cells of the first set. According to an embodiment, the display 120 may be configured to emit each of the second light emission elements, by using each of the second bit sequences 320 obtained from each of the memory cells of the second set.

According to an embodiment, the display 120 may include a plurality of light emission elements including the first light emission elements and the second light emission elements, and a plurality of memory cells respectively connected to the plurality of light emission elements. According to an embodiment, the display 120 may be configured to obtain, from the information received from the processor 110, a plurality of bit sequences. According to an embodiment, the display 120 may be configured to identify bit sequences of a first set and bit sequences of a second set from among the plurality of bit sequences. According to an embodiment, the display 120 may be configured to, in memory cells of a first set which are a portion of the plurality of memory cells respectively connected to the first light emission elements, respectively store, as the first bit sequences 310, the bit sequences of the first set. According to an embodiment, the display 120 may be configured to, in memory cells of a second set which are another portion of the plurality of memory cells respectively connected to the second light emission elements, respectively store the second bit sequences 320 obtained by removing one or more bits from each of the bit sequences of the second set. According to an embodiment, the display 120 may be configured to emit each of the first light emission elements, by using each of the first bit sequences 310 obtained from each of the memory cells of the first set. According to an embodiment, the display 120 may be configured to emit each of the second light emission elements, by using each of the second bit sequences 320 obtained from each of the memory cells of the second set.

According to an embodiment, the wearable device 100 may comprise at least one camera facing an eye of the user. According to an embodiment, the first portion 301 may be identified based on a position of a gaze of the user identified from images obtained through the at least one camera.

According to an embodiment, the wearable device 100 may comprise a battery that is rechargeable. According to an embodiment, the display 120 may be configured to, while a remaining capacity of the battery is less than a reference capacity, display the image 300, by emitting each of the first light emission elements in accordance with the PWM scheme using each of the first bit sequences 310 and emitting each of the second light emission elements in accordance with the PWM scheme using each of the second bit sequences 320. According to an embodiment, the display 120 may be configured to, while the remaining capacity is greater than or equal to the reference capacity, display the image 300, by emitting each of the first light emission elements in accordance with the PWM scheme using each of the first bit sequences 310 and emitting each of the second light emission elements in accordance with the PWM scheme using each of third bit sequences having a bit depth identical to the bit depth of each of the first bit sequences 310.

According to an embodiment, the display 120 may be configured to identify the first portion 301 from the information.

According to an embodiment, the information may include data for identifying the first portion 301 outside an area for the image 300 displayed on the display 120.

According to an embodiment, the display 120 may be configured to display the image 300, by emitting each of the first light emission elements in accordance with the PWM scheme using each of the first bit sequences 310 and emitting each of the second light emission elements in accordance with the PWM scheme using each of the second bit sequences 320, while a brightness level of a portion of an environment around the wearable device 100 provided together with the image 300 is lower than a reference brightness level. According to an embodiment, the display 120 may be configured to display the image 300, by emitting each of the first light emission elements in accordance with the PWM scheme using each of the first bit sequences 310 and emitting each of the second light emission elements in accordance with the PWM scheme using each of third bit sequences having a bit depth identical to the bit depth of each of the first bit sequences 310, while the brightness level is greater than or equal to than the reference brightness level.

As described above, a method executed for a display 120 of a wearable device 100 including a processor 110 may comprise receiving, from the processor 110, information regarding an image 300. According to an embodiment, the method may comprise, using each of first bit sequences 310, emitting, in accordance with a pulse width modulation (PWM) scheme, each of first light emission elements in an emission layer of the display 120 of the wearable device 100 used for displaying of a first portion 301 of the image 300 identified in accordance with a gaze of a user wearing the wearable device 100. According to an embodiment, the method may comprise, using each of second bit sequences 320, emitting, in accordance with the PWM scheme, each of second light emission elements in the emission layer for displaying of a second portion 302 of the image 300 around the first portion 301 of the image 300. According to an embodiment, the method may comprise, based on the emission of each of the first light emission elements and the emission of each of the second light emission elements, displaying the image 300. According to an embodiment, a bit depth of each of the first bit sequences 310 may be higher than a bit depth of each of the second bit sequences 320.

According to an embodiment, the first portion 301 may be identified based on a position of a gaze of the user identified from images obtained through at least one camera of the wearable device 100 facing an eye of the user.

According to an embodiment, the method may comprise, while a remaining capacity of a rechargeable battery of the wearable device 100 is less than a reference capacity, displaying the image 300, by emitting each of the first light emission elements in accordance with the PWM scheme using each of the first bit sequences 310 and emitting each of the second light emission elements in accordance with the PWM scheme using each of the second bit sequences 320. According to an embodiment, the method may comprise, while the remaining capacity is greater than or equal to the reference capacity, display the image 300, by emitting each of the first light emission elements in accordance with the PWM scheme using each of the first bit sequences 310 and emitting each of the second light emission elements in accordance with the PWM scheme using each of third bit sequences having third bit sequences have a bit depth identical to the bit depth of each of the first bit sequences 310.

According to an embodiment, the method may comprise identifying the first portion 301 from the information.

According to an embodiment, the method may comprise displaying the image 300, by emitting each of the first light emission elements in accordance with the PWM scheme using each of the first bit sequences 310 and emitting each of the second light emission elements in accordance with the PWM scheme using each of the second bit sequences 320, while a brightness level of a portion of an environment around the wearable device 100 provided together with the image 300 is lower than a reference brightness level. According to an embodiment, the method may comprise displaying the image 300, by emitting each of the first light emission elements in accordance with the PWM scheme using each of the first bit sequences 310 and emitting each of the second light emission elements in accordance with the PWM scheme using each of third bit sequences having a bit depth identical to the bit depth of each of the first bit sequences 310, while the brightness level is greater than or equal to than the reference brightness level.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 840) including one or more instructions that are stored in a storage medium (e.g., internal memory 836 or external memory 838) that is readable by a machine (e.g., the electronic device 801). For example, a processor (e.g., the processor 820) of the machine (e.g., the electronic device 801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device (100) comprising:
a display (120) including a driving layer formed at a silicon substrate, and an emission layer on the driving layer; and
a processor (110),
wherein the display (120) is configured to:
receive, from the processor (110), via the driving layer, information regarding an image (300);
using each of first bit sequences (310), control, in accordance with a pulse width modulation (PWM) scheme, each of first light emission elements in the emission layer to emit light for displaying of a first portion (301) of the image (300) identified in accordance with a gaze of a user wearing the wearable device (100);
using each of second bit sequences (320), control, in accordance with the PWM scheme, each of second light emission elements in the emission layer to emit light for displaying of a second portion (302) of the image (300) around the first portion (301) of the image (300); and
based on the emission of each of the first light emission elements and the emission of each of the second light emission elements, display the image (300),
wherein a bit depth of each of the first bit sequences (310) is higher than a bit depth of each of the second bit sequences (320).

2. The wearable device of claim 1, wherein the display (120) includes:
a plurality of light emission elements including the first and second light emission elements; and
a plurality of memory cells respectively connected to the plurality of light emission elements, and
wherein the display (120) is configured to:
store, in each of the plurality of memory cells, each of a plurality of bit sequences obtained from the information received from the processor (110);
obtain each of the plurality of bit sequences from each of the plurality of memory cells;
obtain each of the first bit sequences (310) by adding one or more bits to each of bit sequences of a first set obtained from a portion of the plurality of memory cells respectively connected to the first light emission elements;
obtain each of the second bit sequences (320) by bypassing adding the one or more bits to each of bit sequences of a second set obtained from another portion of the plurality of memory cells respectively connected to the second light emission elements;
using each of the first bit sequences (310), control each of the first light emission elements to emit light; and
using each of the second bit sequences (320), control each of the second light emission elements to emit light.

3. The wearable device of claim 2, wherein the one or more bits in each of the first bit sequences (310) are positioned behind the least significant bit (LSB) of each of the bit sequences of the first set.

4. The wearable device of claim 2, wherein the one or more bits in each of the first bit sequences (310) are positioned in front of the most significant bit (MSB) of each of the bit sequences of the first set.

5. The wearable device of claim 2, wherein each of the plurality of light emission elements is respectively connected to each of the plurality of memory cells through circuitry for pulse width modulation, and
wherein the display (120) is configured to:
by providing each of the first bit sequences (310) to the circuitry connected to each of the first light emission elements, control each of the first light emission elements to emit light; and
by providing each of the second bit sequences (320) to the circuitry connected to each of the second light emission elements, control each of the second light emission elements to emit light.

6. The wearable device of claim 2, wherein the display (120) further includes memory different from the plurality of memory cells,
wherein the one or more bits are obtained from the memory, and
wherein a size of each of the first bit sequences (310) is larger than a maximum storage size of each of the plurality of memory cells.

7. The wearable device of claim 1, wherein the display (120) includes:
a plurality of light emission elements including the first and second light emission elements,
a plurality of memory cells respectively connected to the plurality of light emission elements, and
memory different from the plurality of memory cells,
wherein memory cells of a first set respectively connected to the first light emission elements from among the plurality of memory cells are used for obtaining each of the first bit sequences (310) in conjunction with the memory,
wherein memory cells of a second set respectively connected to the second light emission elements from among the plurality of memory cells are used for obtaining each of the second bit sequences (320), and
wherein the memory is used for obtaining each of the first bit sequences (310) from among the first bit sequences (310) and the second bit sequences (320).

8. The wearable device of claim 1, wherein the display (120) includes:
a plurality of light emission elements including the first light emission elements and the second light emission elements, a plurality of memory cells respectively connected to the plurality of light emission elements, and memory different from the plurality of memory cells,
wherein the plurality of memory cells includes memory cells of a first set respectively connected to the first light emission elements, and memory cells of a second set respectively connected to the second light emission elements, and
wherein the display (120) is configured to:
obtain the first bit sequences (310) by adding one or more bits obtained from the memory to each of bit sequences of a first set respectively obtained from the memory cells of the first set, and control each of the first light emission elements to emit light using each of the first bit sequences (310); and
obtain, as the second bit sequences (320), bit sequences of a second set respectively obtained from the memory cells of the second set, and control each of the second light emission elements to emit light using each of the second bit sequences (320).

9. The wearable device of claim 1, wherein the display (120) includes
a plurality of light emission elements including the first light emission elements and the second light emission elements, a plurality of memory cells respectively connected to the plurality of light emission elements, and memory different from the plurality of memory cells, and
wherein the display (120) is configured to:
obtain a plurality of bit sequences from the information received from the processor (110);
by adding one or more bits to each of bit sequences of a first set to be stored in a portion of the plurality of memory cells respectively connected to the first light emission elements from among the plurality of bit sequences, obtain each of first bit sequences (310);
obtain, as the second bit sequences (320), bit sequences of a second set to be stored in another portion of the plurality of memory cells respectively connected to the second light emission elements from among the plurality of bit sequences;
store, in the memory, the one or more bits which are a portion of each of the first bit sequences (310);
store, in each of memory cells of a first set which is the portion of the plurality of memory cells, each of the bit sequences of the first set which is a remaining portion of each of the first bit sequences (310);
store, in each of memory cells of a second set which is the another portion of the plurality of memory cells, each of the second bit sequences (320);
control each of the first light emission elements to emit light, by using each of the first bit sequences (310) obtained by adding the one or more bits obtained from the memory to each of the bit sequences of the first set obtained from each of the memory cells of the first set; and
control each of the second light emission elements to emit light, by using each of the second bit sequences (320) obtained from each of the memory cells of the second set.

10. The wearable device of claim 1, wherein the display (120) includes:
a plurality of light emission elements including the first light emission elements and the second light emission elements, a plurality of memory cells respectively connected to the plurality of light emission elements, and memory different from the plurality of memory cells, and
wherein the display (120) is configured to:
obtain, from the information received from the processor (110), a plurality of bit sequences including the first bit sequences (310) and the second bit sequences (320);
store, in the memory, a portion of each of the first bit sequences (310);
store, in each of memory cells of a first set which is a portion of the plurality of memory cells respectively connected to the first light emission elements, a remaining portion of each of the first bit sequences (310);
store, in each of memory cells of a second set which is another portion of the plurality of memory cells respectively connected to the second light emission elements, each of the second bit sequences (320);
control each of the first light emission elements to emit light, by using each of the first bit sequences (310) obtained by adding the portion of each of the first bit sequences (310) obtained from the memory to the remaining portion of each of the first bit sequences (310) obtained from each of the memory cells of the first set; and
control each of the second light emission elements to emit light, by using each of the second bit sequences (320) obtained from each of the memory cells of the second set.

11. The wearable device of claim 1, wherein the display (120) includes:
a plurality of light emission elements including the first light emission elements and the second light emission elements, and a plurality of memory cells respectively connected to the plurality of light emission elements, and
wherein the display (120) is configured to:
obtain, from the information received from the processor (110), a plurality of bit sequences;
identify bit sequences of a first set and bit sequences of a second set from among the plurality of bit sequences;
in memory cells of a first set which are a portion of the plurality of memory cells respectively connected to the first light emission elements, respectively store, as the first bit sequences (310), the bit sequences of the first set;
in memory cells of a second set which are another portion of the plurality of memory cells respectively connected to the second light emission elements, respectively store the second bit sequences (320) obtained by removing one or more bits from each of the bit sequences of the second set;
control each of the first light emission elements to emit light, by using each of the first bit sequences (310) obtained from each of the memory cells of the first set; and
control each of the second light emission elements to emit light, by using each of the second bit sequences (320) obtained from each of the memory cells of the second set.

12. The wearable device of claim 1, further comprising:
at least one camera facing an eye of the user, and
wherein the first portion (301) is identified based on a position of a gaze of the user identified from images obtained through the at least one camera.

13. The wearable device of claim 1, further comprising:
a battery that is rechargeable, and
wherein the display (120) is configured to:
while a remaining capacity of the battery is less than a reference capacity, display the image (300), by emitting each of the first light emission elements in accordance with the PWM scheme using each of the first bit sequences (310) and emitting each of the second light emission elements in accordance with the PWM scheme using each of the second bit sequences (320); and
while the remaining capacity is greater than or equal to the reference capacity, display the image (300), by emitting each of the first light emission elements in accordance with the PWM scheme using each of the first bit sequences (310) and emitting each of the second light emission elements in accordance with the PWM scheme using each of third bit sequences, wherein the third bit sequences have a bit depth identical to the bit depth of each of the first bit sequences (310).

14. The wearable device of claim 1, wherein the display (120) is further configured to identify the first portion (301) from the information.

15. A method executed for a display (120) of a wearable device (100) including a processor (110), comprising:
receiving, from the processor (110), information regarding an image (300);
using each of first bit sequences (310), controlling, in accordance with a pulse width modulation (PWM) scheme, each of first light emission elements in an emission layer of the display (120) of the wearable device (100) to emit light for displaying of a first portion (301) of the image (300) identified in accordance with a gaze of a user wearing the wearable device (100);
using each of second bit sequences (320), controlling, in accordance with the PWM scheme, each of second light emission elements in the emission layer to emit light for displaying of a second portion (302) of the image (300) around the first portion (301) of the image (300); and
based on the emission of each of the first light emission elements and the emission of each of the second light emission elements, displaying the image (300),
wherein a bit depth of each of the first bit sequences (310) is higher than a bit depth of each of the second bit sequences (320).
